# EUROPEAN PATENT SPECIFICATION

(11) **EP 0 365 255 B1**
(45) Date of publication and mention of the grant of the patent: **31.07.1996**
(21) Application number: 89310595.7
(22) Date of filing: 16.10.1989
(51) Int. Cl.: C09K 19/52, G02F 1/1333, C09K 19/58

(54) **Ferroelectric liquid crystal composition and liquid crystal display device**
Ferroelektrische Flüssigkristallmischung und Flüssigkristallanzeigevorrichtung
Composition cristalline liquide ferroélectrique et dispositif d'affichage à cristaux liquide

(30) Priority: 19.10.1988 JP 263230/88; 05.12.1988 JP 307389/88
(43) Date of publication of application: 25.04.1990
(73) Proprietor: MATSUSHITA ELECTRIC INDUSTRIAL CO., LTD., Kadoma-shi, Osaka-fu, 571 (JP)
(72) Inventor: Johten, Kazuhiro, Hirakata-shi Osaka-fu, 573 (JP); Uemura, Tsuyoshi, Kadoma-shi Osaka-fu, 571 (JP); Onishi, Hiroyuki, Ikeda-shi Osaka-fu, 563 (JP); Mochizuki, Hideaki 303, Tojusoukitayama-cho, Osaka-shi Osaka-fu, 543 (JP); Satani, Hiroshi, Neyagawa-shi Osaka-fu, 572 (JP)
(74) Representative: Crawford, Andrew Birkby

(56) References cited:
- EP-A- 0 263 437
- EP-A- 0 292 954
- EP-A- 0 352 637
- WO-A-87/01822
- DE-A- 2 758 317
- MOLECULAR CRYSTALS AND LIQUID CRYSTALS + LETTERS, vol. 82, no. 7, 1982, pages 243-246, Gordon and Breach Science Publishers, Inc., New York, US; E. BIALECKA- FLORJANCZYK: "New optically active dopants for liquid crystal mixtures - (S)-1- phenylethylamine derivatives"

## Description

This invention relates to a liquid crystal display device, and more particularly to a ferroelectric liquid crystal composition and a ferroelectric liquid crystal display device.

Recently liquid crystal displays have been used not only in watches and pocket calculators but also in a wide range of image display equipment including colour televisions. Nematic liquid crystals are mainly used in liquid crystal colour displays. The nematic liquid crystal, however, has characteristics which are far from ideal, and has a number of problems. The ferroelectric liquid crystal has characteristics such as a speedy response and a memory capability which are not possessed by the nematic liquid crystal. Although the ferroelectric liquid crystal has been studied in many aspects for use in display devices, (see for example Optronics, 1988, Vol. 9, pp 93-95, Shimamoto, Optical beam control by use of liquid crystal) its bistability and threshold characteristic deteriorate as time passes, causing the problem that superior initial characteristics cannot be maintained.

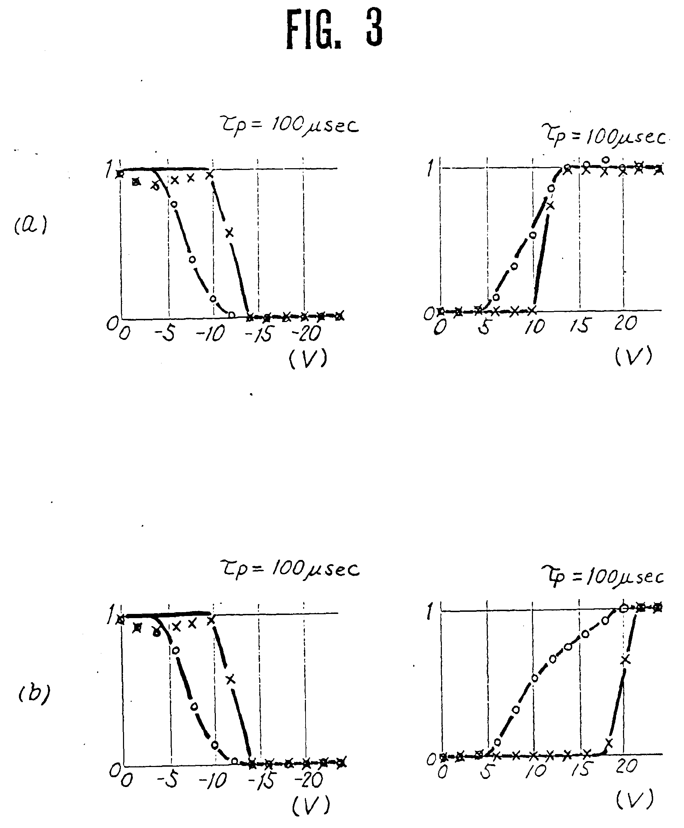

Another such example is WO-A-8701822 which discloses a light modulating material comprising a solid, light transmissive synthetic resin matrix with liquid crystal micro-droplets dispersed therein. In Fig. 3 of the drawings accompanying the present description, a time-dependent deterioration of the threshold characteristic is shown. A cell gap is 2 µm. Mark O shows the maximum relative brightness when a voltage is applied, which is a bulk response, and mark X shows a relative brightness after scanning 1,000 lines of a series of measurement waveforms, which is a memory response. Fig. 3(a) shows a threshold characteristic immediately after the injection of liquid crystal, in which an acute threshold characteristic and superior bistability are shown. In Fig. 3(b) is shown the result of experimentally studying time-dependent deterioration of a liquid crystal panel having such a superior initial characteristic. In Fig. 3(b), which shows a threshold characteristic after 200 hours have passed, thresholds become asymmetric in comparison with Fig. 3(a), and as longer time passes, it has been recognised that the asymmetricity tends to grow towards monostability. Therefore, for practical use, long-term stability of the characteristic is an essential object.

We have now devised a ferroelectric liquid crystal composition whereby time-dependent deterioration of characteristics such as bistability and threshold characteristic can be avoided.

According to the present invention, there is provided a ferroelectric liquid crystal composition comprising a ferroelectric liquid crystal material, and a primary or secondary aliphatic amine, wherein the aliphatic amine has the formula: 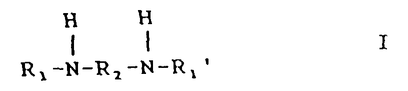 where each of R₁ and R₁' is -H or a hydrocarbon radical, and R₂ is a hydrocarbon radical, or a hydrocarbon radical in which one CH₂ radical or two or more CH₂ radicals which are not adjoining each other, are replaced by one or more of -O-, -CO-, -OCO- and -COO- radicals.

With this composition, time-dependent deterioration of characteristics can be eliminated and the life of the panel characteristics can be dramatically increased.

Embodiments of the invention will now be described by way of example only and with reference to the accompanying drawings in which:
FIGURE 1 shows the structure of a ferroelectric liquid crystal cell in an embodiment of the invention; and
FIGURES 2 and 3 are diagrams showing the threshold characteristic of a ferroelectric liquid crystal composition.

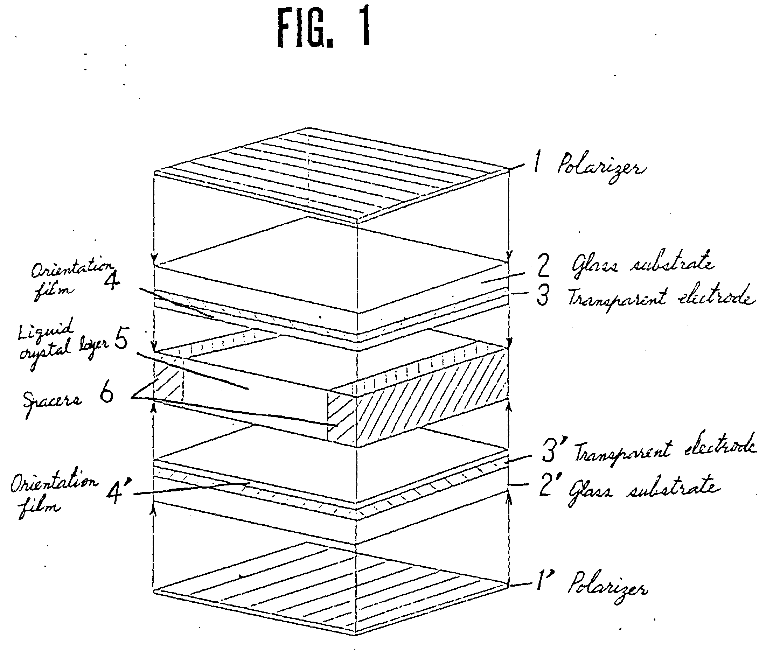

Referring now to the drawings, an embodiment of the invention is described in detail below. Fig. 1 shows the structure of a liquid crystal cell. In this Figure, numerals 1 and 1' are polarisers, numerals 2 and 2' are glass substrates, 3 and 3' are transparent electrodes, 4 and 4' are column layers formed by oblique vapour deposition, or organic orientation film layers treated to have a specific orientation, and numeral 5 is a ferroelectric liquid crystal layer of the invention containing an aliphatic amine. Aliphatic amines which can be used for the invention have formula I above. They are primary or secondary aliphatic amines. Tertiary aliphatic amines are not suitable.

A preferred aliphatic amine is, for example, Jeffamine (D230 and D400) but there are other usable compounds. When aromatic amines and tertiary amines are used, the same effect cannot be obtained.

FIGURE 1 shows the structure of a transparent type liquid crystal cell, and by placing a reflector outside a polariser 1 or 1' in Fig. 1, it can be used as a reflection-type liquid crystal cell.

### Example 1

Material characteristic values of a ferroelectric liquid crystal material used in this Example are shown below.

Liquid crystal material: ZLI-3654 (MERCK)

Phase transition temperatures: 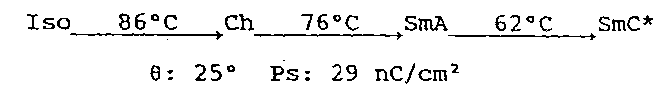
- Where θ :: tilting angle
- Ps :: spontaneous polarization
- Iso :: isotropic liquid crystal phase
- Ch :: cholesteric phase
- SmA :: smectic A phase
- SmC*:: chiral smectic C phase
The liquid crystal is not limited to ZLI-3654.

Below are shown phase transition temperatures when 0.3 wt% of Jeffamine (D230) is added.

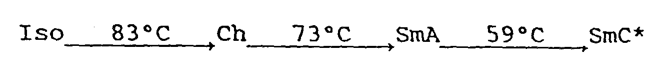

Phase transition temperatures were measured by texture observations through a polarizing microscope and a DSC (differential scanning calorimeter). The structural formula of Jeffamine (D230) is as below.

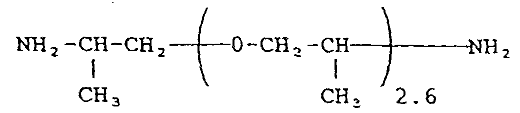

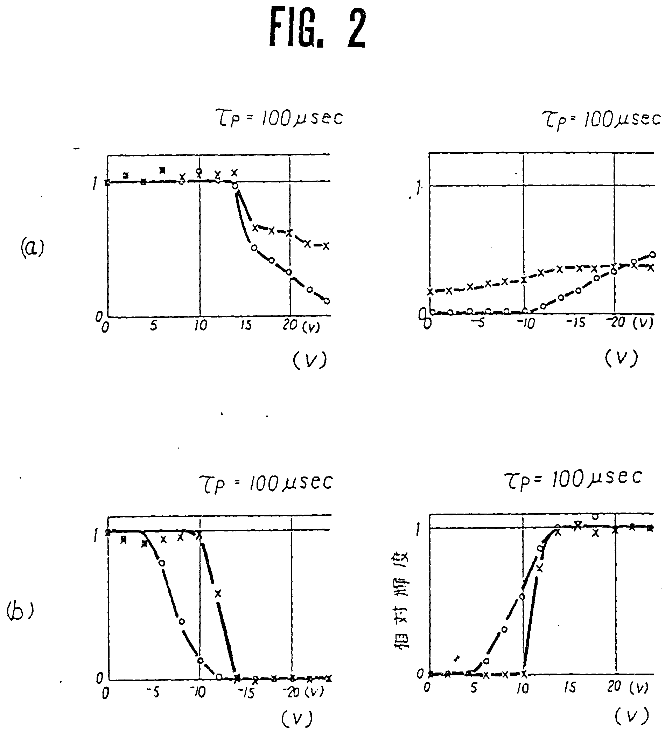

Fig. 2 shows the threshold characteristic of the ferroelectric liquid crystal. Fig. 2(a) shows the threshold characteristic when only ZLI-3654 was injected into a cell, Fig. 2(b) shows the threshold characteristic 1,000 hours after injecting a ferroelectric liquid crystal composition obtained by adding 0.3 wt% of Jeffamine (D230) as an aliphatic amine to ZLI-3654 into a cell. A cell gap is 2 µm. Mark 0 shows maximum relative brightness when a voltage is applied, which represents a bulk response, and mark X shows relative brightness after scanning 1,000 lines of a series of measurement waveforms, which represents a memory response. In Fig. 2, the threshold characteristic, when injecting liquid crystal only, deteriorates after 1,000 hours, while the threshold characteristic, when adding Jeffamine, continues to be symmetric and acute even after 1,000 hours have passed. It is considered that as a result of ornamenting the orientation film surface with an amine, the polarity of the orientation film is increased and the interfacial condition between the liquid crystal and the orientation film is changed. It is also considered that with the amine existing among liquid crystal molecules, interactions between side surfaces of liquid crystal molecules are moderated. These effects would contribute to elimination of deterioration of the liquid crystal characteristics. The added amount of amine may not be specifically limited, but, practically an amount of 0.01 to 5wt% is preferable. However, if it is less than an appropriate amount, the above additive effects can not be obtained, thus resulting in a time-dependent deterioration of the characteristics. If it is more than a necessary amount, the specific resistance of the liquid crystal decreases, which tends to cause a twist, hence the specific resistance of a liquid crystal of 1 x 10¹¹ and more is preferable after addition of the additive.

In Table 1, added amounts of additives to a liquid crystal and respective specific resistances are shown. In Table 1, in 0.3wt% of D400 the specific resistance was below 1 x 10¹¹ and, thus, a time-dependent deterioration of the characteristics could not be prevented. No effect could be obtained, when using, as an additive, aromatic amines such as N, N'-diphenyl-p-phenylene diamine, triphenylamine, diphenylamine, methyl diphenylamine, aniline, dimethyl aniline, aminophenol, nitro aniline, anisidine, phenyl diethanolamine and 1,1'-(phenylimino)-di-2-propanol. When using tertiary aliphatic amines such as tribenzyl amine, dimethyl benzyl amine, 2,4,6-trisdimethyl amino methyl phenol (DMP-30) and dimethyl amino methyl phenol (DMP-10), no effect could be obtained, either.

### Example 2

When using the same liquid crystal cell as that used in Example 1 and adding Jeffamine D400 as the aliphatic amine, a symmetric and acute threshold characteristic was observed even after 1,000 hours.

**Table 1**

| Additive | Added Amount wt% | Specific resistance Ω.cm |
|---|---|---|
| D400 | 0.3 | 3.0 x 10¹⁰ |
| | 0.1 | 1.2 x 10¹¹ |

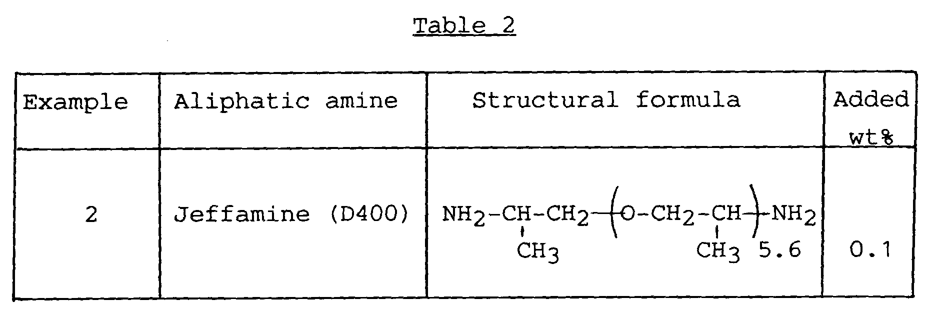

## Claims

1. A ferroelectric liquid crystal composition comprising a ferroelectric liquid crystal material, and a primary or secondary aliphatic amine, wherein the aliphatic amine has the formula: 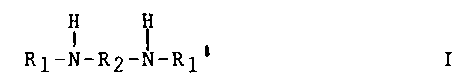 where each of R₁ and R₁' is -H or a hydrocarbon radical, and R₂ is a hydrocarbon radical or a hydrocarbon radical in which one CH₂ radical or two or more CH₂ radicals which are not adjoining each other, are replaced by one or more of -O-, -CO-, -OCO- and -COO- radicals.

2. A composition according to claim 1, wherein the amount of the aliphatic amine is 0.01 to 5wt%.

3. A liquid crystal display using a ferroelectric liquid crystal composition according to claim 1 or 2.

## Patentansprüche

1. Eine ferroelektrische Flüssigkristallzusammensetzung, bestehend aus einem ferroelektrischen Flüssigkristallstoff und einem aliphatischen Primär- oder Sekundäramin, wobei das Amin die folgende Formel hat: 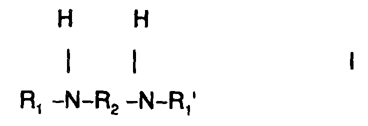 wobei jedes der R₁ und R₁' -H oder ein Kohlenwasserstoffradikal und R₂ ein Kohlenwasserstoffradikal oder ein Kohlenwasserstoffradikal ist, in dem ein CH₂-Radikal oder zwei oder mehrere CH₂-Radikale, die nicht aneinanderstoßend sind, durch ein oder mehrere von -O-, -CO-, -OCO- und -COO- Radikale ersetzt werden.

2. Eine Zusammensetzung nach Anspruch 1, wobei die Menge des aliphatischen Amins 0,01 bis 5 Gewichts-% ist.

3. Eine Flüssigkristallanzeige, die eine ferroelektrische Flüssigkristallzusammen setzung nach Anspruch 1 oder 2 verwendet.

## Revendications

1. Une composition à cristaux liquides ferroélectriques comprenant un matériau à cristaux liquides ferroélectriques, et une amine secondaire, dans laquelle l'amine aliphatique a la formule: 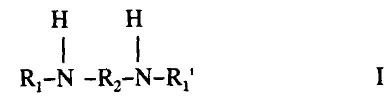 dans laquelle chaque R₁ et R₁' est -H ou un radical d'hydrocarbure et R₂ ou un radical d'hydrocarbure dans lequel un radical CH₂ ou deux ou plusieurs radicaux CH₂ qui ne sont pas joints l'un à l'autre, sont remplacés par un ou plusieurs des radicaux -O-, -CO-, -OCO- et -COO-.

2. Une composition selon la revendication 1, dans laquelle la quantité d'amine aliphatique est 0,01 et 5% de poids.

3. Un affichage à cristaux liquides utilisant une composition à cristaux liquides ferroélectriques selon la revendication 1 ou 2.
